# EUROPÄISCHE PATENTSCHRIFT

(11) **EP 0 562 167 B1**
(45) Veröffentlichungstag und Bekanntmachung des Hinweises auf die Patenterteilung: **04.07.2001**
(21) Anmeldenummer: 92120084.6
(22) Anmeldetag: 25.11.1992
(51) Int. Cl.: H04L 12/56

(54) **Verfahren zum Routing von Datenpaketen zu Zielknoten in einem Kommunikationsnetz**
Method for routing a data packet to a destination node in a communications network
Méthode d'acheminement des paquets de données vers un noeud de destination dans un réseau de communication

(30) Priorität: 27.03.1992 DE 4210107
(43) Veröffentlichungstag der Anmeldung: 29.09.1993
(73) Patentinhaber: SIEMENS AKTIENGESELLSCHAFT, 80333 München (DE)
(72) Erfinder: Mersch, Norbert, Dipl.-Ing., W-8000 München 71 (DE); Uhl, Tadeusz, Dr., W-2384 Eggebek (DE)

(56) Entgegenhaltungen:
- ARCHIV F}R ELEKTRONIK UND ]BERTRAGUNGSTECHNIK Bd. 46, Nr. 2, M{rz 1992, STUTTGART Seiten 93 - 101 , XP291308 MERSCH UND UHL 'Algorithmen f}r die Bestimmung der schleifenlosen alternativen Wege in speichervermittelnden Netzen'
- PERFORMANCE OF COMPUTER SYSTEMS. M. ARATO ET AL. (EDS.). IIASA, NORTH-HOLLAND PUBLISHING CO., 1979. Seiten 541 - 546 A. SEGALL 'Failsafe distributed loop-free routing in communication networks.'
- IEEE TRANSACTIONS ON COMPUTERS Bd. 39, Nr. 7, Juli 1990, NEW YORK Seiten 870 - 881 , XP137242 SHIN & CHEN 'Minimal order loop-free routing strategy'

## Beschreibung

Moderne Kommunikationsnetze, die nach dem Prinzip "store- and forward" betrieben werden, gewinnen in den letzten Jahren immer mehr an Bedeutung. Man bezeichnet diese Systeme auch als Rechnernetze (computer network), bzw. Datennetze (data network). Um eine Kompatibilität für diese Kommunikationsnetze zu erreichen, wurde ein logisches Modell für diese Kommunikationssysteme entworfen und in internationalen Empfehlungen (z.B. OSI-Modell von ISO) veröffentlicht.

Die in diesem Modell enthaltenen Vereinbarungen zur Steuerung von Rechnernetzen (im weiteren Protokolle genannt) entscheiden über die Leistungsfähigkeit dieser Netze. Eine sehr wichtige Rolle spielt dabei das sogenannte Routing-Protokoll, welches in der dritten Schicht (Vermittlungsschicht) des OSI-Modells implementiert ist. Ziel des Routing-Protokolls ist es, in einem Rechnernetz den angebotenen Datenverkehr über den jeweils geeignetsten Weg zum gewünschten Ziel zu lenken. Es gibt eine ganze Reihe von Merkmalen, die ein bestimmtes Routingverfahren bzw. Routing-Protokoll charakterisieren. Dadurch ergeben sich viele Realisierungsmöglichkeiten, die zu vielen unterschiedlichen Routingverfahren führen. Einen guten Überblick über die existierenden Routingverfahren findet man in der Zeitschrift "ntz Archiv, Bd. 9, H.12, 1987, S.317-325" mit dem Beitrag "Routing-Algorithmen für paketvermittelte Datennetze - ein Beitrag zur Systematik von Liebl, F." (Dokument 1).

Von besonderer Bedeutung für die Praxis sind die adaptiven, verteilten Routingverfahren mit globalen Netzzustandsinformationen. Die Adaptivität dieser Verfahren erfordert einen Austausch der Netzzustandsinformationen zwischen allen Kommunikationsknoten. Dadurch erreicht man eine gute Anpassung an die Last- und Topologieänderungen im Netz.

Ein Nachteil der adaptiven, verteilten Routingverfahren besteht darin, daß eine falsch gewählte Aktualisierungsperiode zur vermehrten Schleifenbildung führt, die die Netzbelastung stark erhöht. Deshalb ist es wichtig, vorhandene Schleifen möglichst schnell zu erkennen und wieder abzubauen. Geschieht das nicht, können die Resourcen eines Bereichs durch wenige Datenblöcke vollständig in Anspruch genommen werden. So entstehen Netzüberlastungen, die im Extremfall zu einem Zusammenbruch des Rechnernetzes führen können.

Für die Behandlung des Problems der Schleifenbildung in Rechnernetzen gibt es grundsätzlich zwei Möglichkeiten. Man kann entweder Verfahren verwenden, in denen grundsätzlich keine Schleifen vorkommen oder eine Schleifenüberwachung benutzen, die zur Erkennung von kreisenden Datenblöcken dient.

Von den prinzipiell schleifenlosen Verfahren ist bisher nur das "Single Path Shortest Route"-Verfahren aus dem Buch "Principles Of Computer Communication Network Design, John Wiley & Sons, New York, 1983, von Seidler, J." (Dokument 2) bekannt. Die Zahl der bekannten Verfahren zur Schleifenüberwachung ist dagegen wesentlich größer.

In der Praxis von Bedeutung sind auch Verfahren, die es ermöglichen, potentielle Routing-Schleifen in fest vorgegebenen bzw. manuell erstellten Routing-Tabellen zu finden. Diese Verfahren, die im folgenden als Verfahren zur Schleifenerkennung bezeichnet werden, lassen sich in zwei Gruppen einteilen.

Die erste Gruppe dieser Verfahren benutzt das Auftreten von Wegen unendlicher Länge als Kriterium für schleifenbehaftete Routing-Tabellen. Kann man nachweisen, daß alle möglichen Wege in einem Rechnernetz nach dem Durchlaufen einer maximalen Anzahl von Knoten enden, so ist die Routing-Tabelle schleifenlos. Ein Vertreter dieser Gruppe ist in dem Artikel "Mathematisches Modell von Vermittlungsnetzen mit hierarchischem und nichthierarchischem Verbindungsaufbau" von Willie, H. in der Zeitschrift "ntz Archiv", Bd. 4, Heft 5, 1982, S. 127-142 (Dokument 3) näher beschrieben.

Das Hauptproblem dieser Verfahren besteht im immensen Aufwand zur Erfassung aller Wege.

Die zweite Gruppe dieser Verfahren zur Schleifenüberwachung benutzt ein Hierarchiekriterium zum Erkennen von Schleifen in den Routing-Tabellen. Hierzu wird die Topologie der Knoten in einer bestimmten Hierarchie angeordnet und überprüft, ob diese Hierarchie bei Durchlaufen der durch die Routing-Tabelle vorgegebenen Wege nicht verletzt wird. Verfahren, die auf diesem Prinzip beruhen, sind durch Chan, W, "Recursive Algorythms for Computing End-to-End Blocking in an Network with Arbitrary Routing Plan, IEEE Trans. on Commun. no. 2, Februar 1980, pp. 153-164" (Dokument 4) und Klein, W."Routing Planning in a Large Signalling Network, Proc. of llth Int. Teletraffic Congress, Turin, Juni 1988, pp. 2.4A.5.1-2.4A.5.9" (Dokument 5) bekannt.

Die beiden genannten Gruppen von Verfahren zur Schleifenerkennung erlauben somit lediglich eine Überprüfung existierender Routing-Tabellen auf Schleifenlosigkeit. Es fehlen bisher Verfahren zum Entwurf von schleifenlosen Routing-Tabellen.

Der Erfindung liegt das Problem zugrunde, ein geeignetes Routing-Verfahren anzugeben, das die Bestimmung von a priori schleifenlosen potentiellen Verkehrswegen in einem Kommunikationsnetz ermöglicht.

Dieses Problem wird durch die Merkmale des Anspruchs 1 gelöst.

Eine weitere Ausführungsform der Erfindung ist durch Anspruch 2 angegeben. Durch diese Ausführungsform verringert sich der Berechnungsaufwand zur Ermittlung der potentiellen Verkehrswege um so mehr, je stärker die Netze vermascht sind. Dies rührt daher, weil bei solchen stark vermaschten Netzen nach der Ausführung des Verfahrensschritts d) gemäß Anspruch 1 bereits kaum mehr unterversorgte Knoten (Knoten mit weniger als einer vorgegebenen Anzahl von potentiellen Verkehrswegen bezüglich eines Zielknotens) vorhanden sind.

Eine weitere Ausführungsform der Erfindung ist durch Anspruch 3 angegeben. Bei dieser Ausführungsform verringert sich der Berechnungsaufwand zur Ermittlung der potentiellen Verkehrswege um so stärker, je schwächer das Netz vermascht ist. Dies rührt daher, weil bei schwach vermaschten Netzen nach Ausführung des Verfahrensschritts d) gemäß Anspruch 1 noch immer viele unterversorgte Knoten vorhanden sind und die Bestimmung aller horizontalen Teilwege als potentielle Verkehrswege wegen der geringen Vermaschung nicht zum Auftreten von einer großen Zahl von Schleifen führt, die nachher wieder aufgetrennt werden müssen.

Im folgenden wird die Erfindung anhand der Zeichnung näher erläutert.
FIG 1 zeigt eine spezielle Abbildung der Topologie eines Kommunikationsnetzes auf eine Hierarchiestruktur bezüglich eines bestimmten Zielknotens,
FIG 2 zeigt die Knoten einer Hierarchieebene und deren Verbindungen durch horizontale Teilwege,
FIG 3 zeigt beispielhaft eine mit Hilfe des iterativen Verfahrens gewonnene Routing-Tabelle für eine bestimmte vorgegebene Netztopologie,
FIG 4 zeigt eine Netztopologie, die der Ermittlung der Routing-Tabelle gemäß FIG 3 zugrunde liegt.

Zur Bestimmung schleifenloser Routing-Tabellen wird ein Kriterium benötigt, anhand dessen schleifenverursachende von nichtschleifenverursachenden Routing-Entscheidungen unterschieden werden können. Als ein solches Kriterium eignet sich insbesondere das bereits für Verfahren zur Schleifenerkennung erwähnte Hierarchiekriterium. Die Hierarchie wird jedoch erfindungsgemäß nicht wie bisher der vorhandenen Routing-Tabelle angepaßt, sondern die Routing-Tabelle wird so aufgebaut, daß sie der erwähnten Hierarchie entspricht. Die Erzeugung geeigneter Hierarchien wird im folgenden näher erläutert.

Eine Einordnung der Knoten eines Rechnernetzes in eine Hierarchie bedeutet eine Abbildung der Topologie auf eine Hierarchiestruktur. Die erzeugte Hierarchiestruktur muß entsprechend der Hierarchiebedingung in einer bestimmten Richtung durchlaufen werden, um die Schleifenlosigkeit zu garantieren. Ein Durchlaufen der Hierarchie entspricht aber in der Realität einem Durchlaufen des Rechnernetzes. Dieses sollte immer zu einer Annäherung zu dem Zielknoten führen. Aus diesem Grunde ist es sinnvoll, daß die Hierarchieebenen etwas mit der Nähe zum Zielknoten zu tun haben, also z.B. mit einer bestimmten Weglänge (hop distance) zum Zielknoten assoziiert werden.

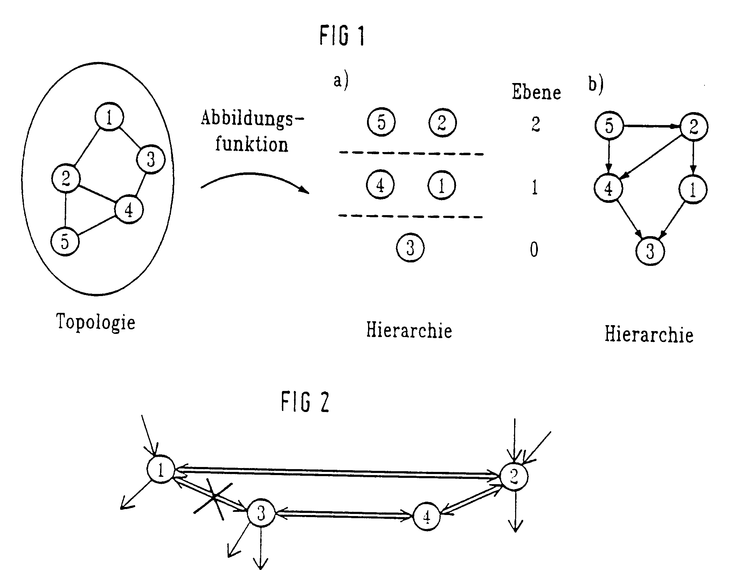

Figur 1 zeigt eine spezielle Abbildung der Topologie eines Kommunikationsnetzes auf eine Hierarchiestruktur bezüglich eines bestimmten Zielknotens. Dabei wurde als Hierarchiekriterium die hop distance (kürzeste Entfernung zum Zielknoten, gemessen in durchlaufenen Kanälen) verwendet. Wie aus Figur 1 ersichtlich, muß die durch die Hierarchiestruktur erzeugte Rangfolge der Knoten nicht eindeutig sein, so daß es durchaus mehrere Knoten mit gleichem Rang (Knoten in derselben Hierarchieebene) geben kann. Diese Tatsache muß bei der Konstruktion der Routing-Tabelle berücksichtigt werden.

Eine der hop distance entsprechende Hierarchiestruktur kann z.B. sehr effektiv durch den sogenannten inversen Etikettierungs-Algorithmus erzeugt werden, wenn man als Kanallänge (Teillänge) die Länge 1 vorgibt. Der inverse Etikettierungs-Algorithmus ist z.B. aus Dokument 2 bekannt. Es handelt sich dabei um einen iterativen Algorithmus, mit dessen Hilfe jeweils für einen bestimmten Zielknoten die hop distance in den jeweils restlichen Knoten des Rechnernetzes bestimmt werden kann. Wesentliches Merkmal des Algorithmus ist das Etikett. Es wird jedem Knoten zugeordnet und beschreibt die kleinste Entfernung zum Zielknoten, die bisher ermittelt werden konnte. Außerdem ist dort eingetragen, über welchen Nachbarknoten dies möglich war. In einem iterativen Verfahren werden diese Werte für alle Knoten des Netzes optimiert.

Der Etikettierungs-Algorithmus kann also als eine geeignete und anpassungsfähige Abbildungsfunktion zur Erzeugung von Hierarchiestrukturen auf Rechnernetzen angesehen werden. Es sind darüber hinaus auch andere sinnvolle Abbildungsfunktionen zur Erzeugung von Hierarchiestrukturen vorstellbar. Es ist z.B. möglich, die geographische Entfernung der Rechnerknoten zum Zielknoten als Hierarchiekriterium zu verwenden. In diesem Falle kommt man ohne den Etikettierungsalgorithmus aus. Auch bei Verwendung des Etikettieralgorithmus gibt es noch eine Vielzahl weiterer Hierarchiekriterien, z.B. die gesamte Verzögerungszeit bis zum Zielknoten oder die gesamte physikalische Leitungslänge bis zum Zielknoten (entsprechend den Leitungskosten).

Die Abbildung einer Topologie auf eine Hierarchie ist nur der erste Schritt zur Konstruktion schleifenloser Routing-Tabellen. In einem zweiten Verfahrensschritt müssen die potentiellen Verkehrswege bezüglich der jeweils betrachteten Hierarchie, d. h. bezüglich des jeweils betrachteten Zielknotens bestimmt werden, was dem Eintragen dieser potentiellen Verkehrswege in die Routing-Tabellen der Knoten entspricht.

Dieser zweite Verfahrensschritt kann durch eine erweiterte Anwendung der Verfahren der kürzesten Wege, wie z.B. des angegebenen Etikettierungs-Algorithmus, auf alternative Wege erreicht werden. Zur Verdeutlichung dieser Anwendung wird nochmals die Hierarchiestruktur in FIG 1 betrachtet, die durch die Abbildung der Topologie des Kommunikationsnetzes in FIG 1 erzeugt wurde. Durch die Verfahren der kürzesten Wege ist neben der Abbildung der Topologie gleichzeitig pro Knoten genau einer der absteigenden Wege als potentieller Teilweg bekannt. Bestimmt man nun erfindungsgemäß alle absteigenden Wege als potentielle Wege, so wird die Hierarchiebedingung dennoch gewahrt und man gewinnt gleichzeitig einen Zuwachs an alternativen Wegen.

Darüber hinaus können sogar horizontale Wege, d.h. Wege, die innerhalb einer Hierarchieebene liegen, genutzt werden, wenn diese Wege auf Schleifen überprüft werden. Dies kann in einem dritten Verfahrensschritt z.B. gemäß dem in Dokument 5 beschriebenen Algorithmus erfolgen. Dieser Algorithmus ist ein Verfahren zur Schleifenerkennung und benutzt als solcher ebenfalls das Hierarchiekriterium. Wesentliches Merkmal dieses Algorithmus ist es, daß versucht wird, die Netzknoten in Ebenen zu unterteilen, zwischen denen nur absteigende Wege existieren. Gelingt dies, so ist die gegebene Routing-Tabelle schleifenfrei. Bleiben nicht zuteilbare Netzknoten übrig, so enthält diese Restmenge mindestens eine Schleife.

Zusammenfassend läßt sich das Verfahren für die Bestimmung schleifenloser Routing-Tabellen mit alternativen Wegen, unter denen auch horizontale Wege zugelassen werden, in drei Schritten darstellen, nämlich einem ersten Verfahrensschritt, bei dem eine Hierarchiestruktur mit einem geeigneten Algorithmus erzeugt wird, einem zweiten Verfahrens schritt, durch den alle in der Hierarchiestruktur absteigenden Wege als potentielle Verkehrswege bestimmt werden und einen dritten Verfahrensschritt, durch den horizontale Wege unter Überprüfung auf Schleifen als potentielle Verkehrswege bestimmt werden.

Die genannten drei Verfahrensschritte müssen für jeden Zielknoten des Kommunikationsnetzes durchgeführt werden. Für jeden Zielknoten ergibt sich also eine eigene Hierarchiestruktur.

Bei zwei Knoten, die durch zwei horizontale Teilwege entgegengesetzter Richtung miteinander verbunden sind, kann durch die Auswahl dieser horizontalen Teilwege als potentielle Verkehrswege der Fall eintreten, daß die Datenblöcke zwischen den zwei benachbarten Knoten hin- und her pendeln. Diese spezielle Schleife wird auch als Ping-Pong-Schleife bezeichnet.

Bei einem Routing-Verfahren, bei dem sogenannte lokale Zusatzinformationen ausgewertet werden, die beim Empfang eines Datenblocks erzeugt werden (z.B. Informationen über den benutzten Empfangskanal), kann das Auftreten einer Ping-Pong-Schleife durch eine entsprechende Routing-Entscheidung, die die genannte Zusatzinformation berücksichtigt, verhindert werden. Daher braucht bei einem solchen Routing-Verfahren auf die Vermeidung von Ping-Pong-Schleifen bei der Bestimmung von horizontalen Teilwegen als potentiellen Verkehrswegen nicht geachtet zu werden und es können somit horizontale Teilwege in beiden Richtungen als potentielle Verkehrswege in Betracht gezogen werden.

Der dritte Verfahrensschritt kann zum einen dadurch geschehen, daß die horizontalen Teilwege einzeln in Betracht gezogen werden (vorläufige Bestimmung eines horizontalen Teilweges als potentieller Verkehrsweg) und jeweils sofort überprüft wird, ob durch den vorläufig bestimmten potentiellen Verkehrsweg eine Schleife erzeugt wird, oder zum anderen dadurch, daß die horizontalen Teilwege gemeinsam in Betracht gezogen werden (alle horizontalen Teilwege einer Hierarchieebene werden gemeinsam als vorläufige potentielle Verkehrswege bestimmt) und aufgrund einer nachher erfolgten Überprüfung auf Schleifen einzelne, vorläufig als potentielle Verkehrswege bestimmte Teilwege nachträglich wieder ausgeschlossen werden.

Wenn bei der gemeinsamen Betrachtung der Teilwege einer bestimmten Hierarchieebene anhand des Schleifenerkennungsalgorithmus eine größere Schleife (beteiligte Knotenanzahl größer 2) festgestellt wird, muß eine Auswahl aus den in Betracht gezogenen Teilwegen erfolgen, die sicherstellt, daß durch die ausgewählten Teilwege, d.h. die endgültig bestimmten potentiellen Verkehrswege, keine Schleife entstehen kann.

Im folgenden wird ein mögliches Verfahren zur Auflösung einer festgestellten Schleife näher erläutert.

Figur 2 zeigt die Knoten einer Hierarchieebene und deren Verbindungen durch Teilwege. Werden in Figur 2 alle Teilwege der dargestellten Hierarchieebene in Betracht gezogen, so ergibt sich eine Schleife mit einer beteiligten Knotenzahl größer 2. Um die dargestellte Schleife aufzulösen, bleibt nur die Möglichkeit, die bidirektionale Verbindung an einer Stelle aufzutrennen. Bei der Auswahl der aufzutrennenden Verbindung kann in folgenden Schritten vorgegangen werden:
In einem ersten Schritt wird derjenige Knoten der betreffenden Hierarchieebene bestimmt, der die meisten alternativen Sendekanäle (Ausgangskanäle) in der Schleife besitzt.
In einem zweiten Schritt wird derjenige Nachbarknoten des gemäß dem ersten Schritt gefundenen Knotens bestimmt, der ebenfalls die größte Anzahl von alternativen Sendekanälen besitzt.
In einem dritten Schritt wird schließlich die Verbindung zwischen dem gemäß dem ersten und zweiten Schritt gefundenen Knotenpaar herausgelöst, d.h. die zu dieser Verbindung gehörenden Teilwege werden nicht als potentielle Verkehrswege bestimmt bzw. ausgewählt.

Durch das Fehlen der nicht als potentielle Verkehrswege ausgewählten Teilwege der herausgelösten Verbindung gemäß dem vorhergenannten Verfahren wird die Wahlmöglichkeit an potentiellen Verkehrswegen in den Knoten der Hierarchieebene am wenigsten beeinträchtigt.

In dem Beispiel aus Figur 2 besitzt der Knoten 3 die meisten alternativen Sendekanäle (Summe der abgehenden Teile = 4). Der Knoten 1 ist derjenige Knoten des Knotens 3, der die meisten alternativen Sendekanäle besitzt (Summe der abgehenden Teile = 3). In diesem Fall wird also die Verbindung (1,3) von der Schleife entfernt (siehe das Kreuz in Figur 2).

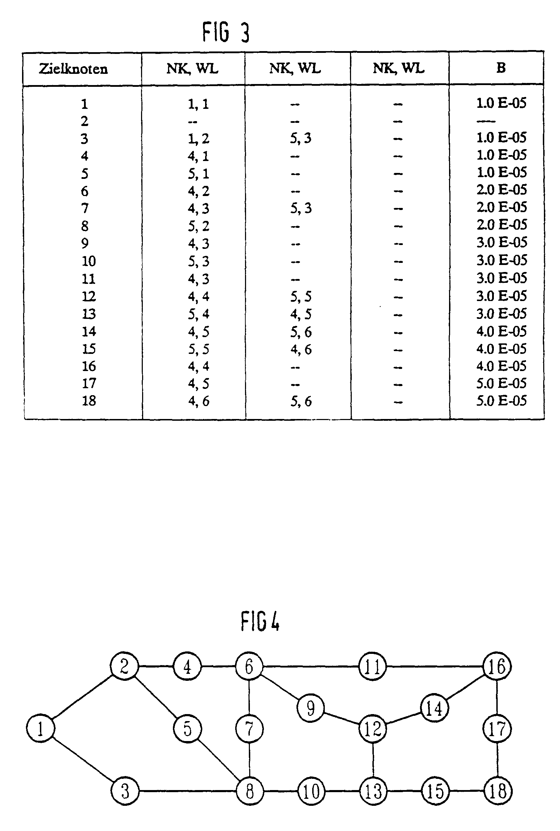

FIG 3 zeigt eine für den Netzknoten 2 der Netztopologie gemäß FIG 4 mit Hilfe des erfindungsgemäßen Verfahrens gewonnene Routing-Tabelle. In dieser Routing-Tabelle ist jedem Zielknoten eine eigene Zeile zugeordnet, in der die nach dem erfindungsgemäßen Verfahren ermittelten potentiellen Verkehrswege in Richtung Zielknoten eingetragen sind. Ein potentieller Verkehrsweg ist dabei jeweils durch die Angabe eines Nachbarknotens NK und einer Gesamtweglänge WL zwischen dem Netzknoten 2 und dem jeweiligen Zielknoten bestimmt. Außerdem ist in FIG 3 für jeden Zielknoten eine Blockierungswahrscheinlichkeit B angegeben, die ein Maß für die Wahrscheinlichkeit der Nichterreichbarkeit eines Zielknotens darstellt und kein Bestandteil der in FIG 3 dargestellten Routing-Tabelle ist. Die Ermittlung der genannten Blockierungswahrscheinlichkeit basiert auf einer angenommenen Ausfallwahrscheinlichkeit eines Teilwegs des Netzes von 1.0 E-10 und einem angenommenen Routing-Verfahren, bei dem die Routing-Entscheidung dezentral, d.h. erst im jeweiligen Transitknoten getroffen wird.

FIG 4 zeigt eine spezielle Netztopologie, die der Ermittlung der Routing-Tabelle gemäß FIG 3 zugrunde liegt.

## Patentansprüche

1. Verfahren zum Routing von Datenpaketen zu Zielknoten in einem Kommunikationsnetz, demgemäß
a) in jedem Knoten des Kommunikationsnetzes bestimmte der zu Nachbarknoten führenden Teilwege als potentielle Verkehrswege zum Routing der Datenpakete benützt werden,
b) in jedem Knoten aus den genannten potentiellen Verkehrswegen für die empfangenen Datenpakete jeweils ein tatsächlicher Verkehrsweg ausgewählt wird,
**dadurch gekennzeichnet,**
daß die potentiellen Verkehrswege ermittelt werden, indem
c) zunächst die Topologie des Kommunikationsnetzes in jeweils eine Hierarchiestruktur bezüglich jedes Zielknotens abgebildet wird,
d) alle in den Hierarchiestrukturen absteigenden Teilwege als potentielle Verkehrswege bestimmt werden.

2. Verfahren gemäß Anspruch 1,
**dadurch gekennzeichnet,**
daß nach Durchführung des Verfahrensschritts d) gemäß Anspruch 1 potentielle Verkehrswege auch aus horizontalen Teilwegen ermittelt werden, indem jeweils ein horizontaler Teilweg bei solchen Knoten als potentieller Verkehrsweg in Betracht gezogen wird, für die nach Durchführung des Verfahrensschrittes d) gemäß Anspruch 1 bezüglich eines bestimmten Zielknotens eine vorgegebene Anzahl von potentiellen Verkehrswegen noch nicht erreicht wurde und nur dann als potentieller Verkehrsweg bestimmt wird, wenn sich durch dessen Bestimmung keine Schleifen ergeben können.

3. Verfahren gemäß Anspruch 1,
**dadurch gekennzeichnet**,
daß nach Durchführung des Verfahrensschritts d) gemäß Anspruch 1 potentielle Verkehrswege auch aus horizontalen Teilwegen ermittelt werden, indem zunächst alle horizontalen Teilwege von jeweils einer Hierarchieebene vorläufig als potentielle Verkehrswege bestimmt werden, sodann das Auftreten von Schleifen geprüft wird und schließlich einzelne horizontale Teilwege nachträglich wieder ausgeschlossen werden, um die festgestellten Schleifen zu vermeiden.

4. Verfahren gemäß einem der Ansprüche 1 bis 3,
**dadurch gekennzeichnet,**
daß die Topologie des Kommunikationsnetzes in eine Hierarchiestruktur abgebildet wird, indem
a) für jeden Knoten derjenige Nachbarknoten ermittelt wird, über den die Gesamtweglänge (Verzögerung) zu einem betrachteten Zielknoten am kleinsten ist,
b) anhand der somit zu den Knoten bekannten Nachbarknoten und Verzögerungen dieser Knoten zu den betrachten Zielknoten eine Hierarchiestruktur aufgebaut wird.

5. Verfahren gemäß einem der Ansprüche 1 bis 4,
**dadurch gekennzeichnet,**
daß
a) ein horizontaler Teilweg auch dann als potentieller Verkehrsweg bestimmt wird, wenn sich dadurch Ping-Pong-Schleifen ergeben können,
b) bei der Auswahl eines tatsächlichen Verkehrsweges anhand von Zusatzinformationen derjenige Teilweg, über den das zu routende Datenpaket empfangen wurde, ausgeschlossen wird.

## Claims

1. Method for routing data packets to destination nodes in a communications network, according to which
a) specific path elements, which lead to adjacent nodes, in each node in the communications network are used as potential traffic paths for routing of the data packets,
b) in each node, an actual traffic path is in each case selected from the said potential traffic paths for the received data packets,
characterized
in that the potential traffic paths are determined by
c) first of all forming the topology of the communications network in a respective hierarchical structure with respect to each destination node,
d) defining as potential traffic paths all the path elements descending in the hierarchical structures.

2. Method according to Claim 1,
characterized
in that, after carrying out method step d) according to Claim 1, potential traffic paths are also determined from horizontal path elements, in that a horizontal path element is in each case considered as a potential traffic path for such nodes for which, after carrying out method step d) according to Claim 1, a predetermined number of potential traffic paths relating to a specific destination node has not yet been reached, and is defined as a potential traffic path only provided no loops can result from its definition.

3. Method according to Claim 1,
characterized
in that, after carrying out method step d) according to Claim 1, potential traffic paths are also determined from horizontal path elements, in that, first of all, all the horizontal path elements in each hierarchical level are provisionally defined as potential traffic paths, the occurrence of loops is then checked and, finally, individual horizontal path elements are subsequently excluded once again in order to avoid the loops which have been found.

4. Method according to one of Claims 1 to 3,
characterized
in that the topology of the communications network is mapped into a hierarchical structure, in that
a) for each node, that adjacent node is determined via which the entire path length (delay) to a destination node under consideration is the shortest,
b) on the basis of the nodes which are thus known to be adjacent to the nodes and the delays of these nodes, a hierarchical structure is formed for the destination nodes under consideration.

5. Method according to one of Claims 1 to 4,
characterized
in that
a) a horizontal path element is defined as a potential traffic path even if this can result in ping-pong loops,
b) using additional information, that path element via which the data packet to be routed was received is excluded from the selection of an actual traffic path.

## Revendications

1. Procédé d'acheminement de paquets de données à des noeuds de destination dans un réseau de communication, suivant lequel
a) dans chaque noeud du réseau de communication, on utilise certains des sous-itinéraires allant à des noeuds voisins comme itinéraires de trafic potentiel pour l'acheminement des paquets de données,
b) dans chaque noeud, on sélectionne parmi lesdits sous-itinéraires de trafic potentiel pour les paquets de données reçus chaque fois un itinéraire de trafic réel,
caractérisé en ce que les itinéraires de trafic potentiels sont déterminés en
c) reproduisant d'abord la topologie du réseau de communication en chaque fois une structure hiérarchique par rapport à chaque noeud de destination,
d) en déterminant tous les sous-itinéraires descendant dans les structures hiérarchiques comme itinéraires de trafic potentiels.

2. Procédé suivant la revendication 1, caractérisé en ce que, après avoir effectué l'étape d) opératoire suivant la revendication 1, on détermine des itinéraires de trafic potentiels aussi parmi des sous-itinéraires horizontaux en prenant en considération comme itinéraire de trafic potentiel chaque fois un sous-itinéraire horizontal pour les noeuds pour lesquels un nombre prescrit d'itinéraires de trafic potentiels n'a pas encore été atteint après avoir effectué l'étape d) opératoire suivant la revendication 1 par rapport à un noeud de destination déterminé, et en ne le définissant comme voie de trafic potentielle que si, en le définissant ainsi, il ne peut pas en résulter des boucles.

3. Procédé suivant la revendication 1, caractérisé en ce que, après avoir effectué l'étape d) opératoire suivant la revendication 1, on détermine des itinéraires de trafic potentiels aussi parmi des sous-itinéraires horizontaux en déterminant d'abord tous les sous-itinéraires horizontaux de chaque fois un niveau hiérarchique provisoirement comme itinéraire de trafic potentiel, en vérifiant ensuite l'apparition de boucles et en excluant enfin ultérieurement à nouveau des sous-itinéraires horizontaux individuels afin d'empêcher les boucles constatées de se produire.

4. Procédé suivant l'une des revendications 1 à 3, caractérisé en ce que l'on reproduit la topologie du réseau de communication dans une structure hiérarchique en
a) déterminant pour chaque noeud le noeud voisin par l'intermédiaire duquel la longueur totale d'itinéraire (temps de propagation) vers un point de destination considéré est la plus petite,
b) en établissant une structure hiérarchique à l'aide des noeuds voisins ainsi connus des noeuds et des temps de propagation de ces noeuds vers les noeuds de destination considérés.

5. Procédé suivant l'une des revendications 1 à 4, caractérisé en ce que
a) un sous-itinéraire horizontal peut être déterminé aussi comme itinéraire de trafic potentiel si des boucles ping-pong peuvent en résulter,
b) lors de la sélection d'un itinéraire de trafic réel il est exclus à l'aide d'informations supplémentaires l'itinéraire de trafic par l'intermédiaire duquel le paquet de données à acheminer a été reçu.
